(19)

**Europäisches Patentamt**
**European Patent Office**
**Office européen des brevets**

(11) **EP 3 772 713 B1**

(12) **EUROPÄISCHE PATENTSCHRIFT**

(45) Veröffentlichungstag und Bekanntmachung des Hinweises auf die Patenterteilung:
**19.02.2025   Patentblatt 2025/08**

(21) Anmeldenummer: **19190748.4**

(22) Anmeldetag: **08.08.2019**

(51) Internationale Patentklassifikation (IPC):
**G06Q 10/20** (2023.01)       **G06Q 10/0631** (2023.01)

(52) Gemeinsame Patentklassifikation (CPC):
**G06Q 10/0631; G06Q 10/20**

(54) **VERFAHREN ZUM BETRIEB EINES SYSTEMS MIT OPTIMALER VERFÜGBARKEIT UND SYSTEM MIT OPTIMALER VERFÜGBARKEIT**

SYSTEM WITH OPTIMAL AVAILABILITY AND METHOD FOR OPERATING A SYSTEM WITH OPTIMAL AVAILABILITY

PROCÉDÉ DE FONCTIONNEMENT D'UN SYSTÈME À DISPONIBILITÉ OPTIMALE ET SYSTÈME À DISPONIBILITÉ OPTIMALE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**10.02.2021   Patentblatt 2021/06**

(73) Patentinhaber: **Siemens Aktiengesellschaft 80333 München (DE)**

(72) Erfinder:
• **Haselböck, Alois**
  **3392 Schönbühel-Aggsbach (AT)**
• **Sperl, Simon**
  **4030 Linz (AT)**
• **Falkner, Andreas**
  **1140 Wien (AT)**
• **Wurl, Alexander**
  **1180 Wien (AT)**

(74) Vertreter: **Siemens Patent Attorneys Postfach 22 16 34 80506 München (DE)**

(56) Entgegenhaltungen:
**DE-A1- 10 010 494**

• **GÜNTHER PAWELLEK: "Integrierte Instandhaltung und Ersatzteillogistik: Vorgehensweisen, Methoden, Tools", 17 February 2016, SPRINGER, ISBN: 978-3-662-48666-5, pages: ToC,289 - 294, XP055630375**
• **THOMAS HANKE: "Risikoorientierte Ersatzteilplanung", INTERNET ARTICLE, 22 March 2013 (2013-03-22), XP055630344, Retrieved from the Internet <URL:https://www.ipih.de/system/files/upload/2013/story/info-2013-hanke-risikoorientierte_ersatzteilplanung.pdf> [retrieved on 20191009]**
• **"Integrierte Instandhaltung und Ersatzteillogistik: Vorgehensweisen, Methoden, Tools", 17 February 2016, SPRINGER, ISBN: 978-3-662-48666-5, article PAWELLEK GÜNTHER: "Integrierte Instandhaltung und Ersatzteillogistik: Vorgehensweisen, Methoden, Tools", pages: ToC,Ch02,Ch03,Ch06 - Ch07, XP055904462**

EP 3 772 713 B1

**Beschreibung**

Die Erfindung betrifft ein Verfahren zum Betrieb eines Systems mit optimaler Verfügbarkeit und ein System mit optimaler Verfügbarkeit.

Eine Betriebsvorrichtung, welche beispielsweise eine Produktionsanlage zur Erzeugung von Produkten, eine Anlage zur Bereitstellung von Betriebsmitteln wie Wasser unter hohem Druck, oder auch die Bereitstellung einer Dienstleistung wie der Betrieb öffentlicher Verkehrsmittel durch entsprechende Betriebsvorrichtungen, umfasst üblicherweise mehrere Komponenten.

Die Komponenten sind jeweils Verschleiß- und Alterungsprozessen ausgesetzt, welche üblicherweise mittels dem stochastischer Parameter MTBF (englisch "mean time between failures") modelliert werden.

Beim langjährigen Betrieb beziehungsweise der Instandhaltung der Betriebsvorrichtung über 20 Jahre oder mehr, kann die Verfügbarkeit von Ersatzteilen für einzelne Komponenten am Markt begrenzt sein.

Eine vorausschauende Lagerhaltung soll die Verfügbarkeit der Komponenten für den Betrieb der Betriebsvorrichtung gewährleisten, um eine mögliche Ausfallzeit möglichst gering zu halten.

Bei der Neubeschaffung von Ersatzteilen kann es ferner zu sehr langen Lieferzeiten kommen, insbesondere bei Sonderanfertigungen, welche für eine hohe Verfügbarkeit der Betriebsvorrichtung entsprechend berücksichtigt werden müssen.

Die Patentschrift DE10010494 A1 offenbart ein Verfahren zur Unterstützung der Instandhaltung von technischen Anlagen, worin wenigstens zwei Ersatzteillager vorhanden sind. Wenn der Bedarf den Lagerbestand eines Ersatzteillagers übersteigt, wendet sich ein beschaffungsorientierter Vorgang an ein benachbartes Ersatzteillager, ein Zentrallager oder ein Ersatzteillager eines Lieferanten.

Es kann bei der systemischen Lagerhaltung, bei welcher eine Lagerhaltung von Ersatzteilen für die Betriebsvorrichtung direkt mit der Betriebsvorrichtung gekoppelt ist, beispielsweise durch ein, zu einer Wartungseinheit der Betriebsvorrichtung zugehöriges bzw. verbundenes Lager, jedoch zu Problemen kommen, wenn die Ersatzteile für die Komponenten der Betriebsvorrichtung beispielsweise durch Korrosion, Verderb, Materialermüdung oder Entsättigung von Flash-Speicherkarten bereits vor oder verfrüht nach der Inbetriebnahme als Ersatzteil ihre zu erwartende Lebensdauer oder MTBF erreicht haben. Dadurch kann es zu unerwünschten Ausfällen, also zu einer geringeren Verfügbarkeit der Betriebsvorrichtung kommen, wodurch deren Effizienz sinkt.

Es ist Aufgabe der Erfindung die Nachteile im Stand der Technik zu überwinden und ein verbessertes Verfahren für einen effizienten und hochverfügbaren Betrieb einer Betriebsvorrichtung bereitzustellen.

Die erfindungsgemäße Aufgabe wird gemäß Anspruch 1 gelöst.

Durch die Erfindung wird nicht nur die zu erwartende Lebensdauer der aktiven Komponenten der Betriebsvorrichtung, sondern auch die zu erwartende Lebensdauer der lagernden Ersatzteile berücksichtigt. Dadurch kann die zu erwartende Lebensdauer einer ausgetauschten Komponente der Betriebsvorrichtung präziser bestimmt werden und die Verfügbarkeit der Betriebsvorrichtung verbessert werden.

Eine Menge an baugleichen Komponenten $C = \{c_1, c_1, ..., c_n\}$ repräsentieren die aktuelle Menge der an der Betriebsvorrichtung installierten Komponenten dieser Bauart.

Beispielsweise können diese baugleichen Komponenten Hardware-Baugruppen, Schienen, Motoren, etc. sein.

Um unterschiedliche Komponenten, also Komponenten jeweils anderer Bauart, zu berücksichtigen, kann eine Menge aller Komponenten $A$ (jeweils unterschiedlicher Bauart) in nicht verbundene Teilmengen $A_j$ mit Komponenten der Bauart $j$ unterteilt werden, wobei $j = 1$ ...*Anzahl unterschiedlicher Bauarten.* Anschließend wird jede Bauart getrennt voneinander für Bauart $j$ bestimmt, wobei $C$ als $A_j$ gesetzt wird.

Jede dieser Komponenten $C = \{c_1, c_1, ..., c_n\}$ weist dabei dieselbe Fehlerwahrscheinlichkeit (MTBF) auf, denselben Installationszeitpunkt $t_{install}(c_i)$ und ein zugehöriges Serviceende $t_{eos}(c_i)$ (englisch "end-of-service").

Das Serviceende beziehungsweise die Serviceendezeit $t_{eos}(c_i)$ beschreibt einen Zeitpunkt, bis zu welchem ein fehlerfreier Betrieb des Systems, welches die Komponenten $C$ umfasst, gewährleistet werden soll. Dies kann beispielsweise durch einen Wartungsvertrag mit einem Dienstleister vereinbart werden.

Eine Wahrscheinlichkeitsverteilungsfunktion (englisch "probability distribution function", PDF) $h_{inst}(t)$ repräsentiert die Fehlerwahrscheinlichkeit einer installierten Komponente, das heißt die Wahrscheinlichkeit eines Zeitintervalls von der Installation einer Komponente bis zu deren Austausch in einem Fehlerfall.

Eine Wahrscheinlichkeitsverteilungsfunktion $h_{stock}(t)$ repräsentiert die Fehlerwahrscheinlichkeit einer lagernden Komponente (englisch "stock"), das heißt die Wahrscheinlichkeit eines Zeitintervalls von der Lagerhaltung einer Komponente bis zu deren Austausch durch Alterung.

Für die Wahrscheinlichkeitsverteilungsfunktionen $h_{inse}(t)$ und $h_{stock}(t)$ können allgemeine Verteilungen angenommen werden, aber besonders geeignet sind Exponential- oder Weibull-Verteilungen zur Realisierung einer Badewannen-Fehlerkurve oder für eine präventive Wartung, bei welcher eine Komponente nach einer vorgegebenen Zeit ersetzt wird, unabhängig davon, ob ein Fehler aufgetreten ist oder nicht.

Die Wahrscheinlichkeitsverteilungsfunktionen $h_{inse}(t)$ und $h_{stock}(t)$ können auch von den zwei zugehörigen MTBF-Werten abgeleitet werden.

Ein Zeitpunkt $t_{stock}$ repräsentiert jenen Zeitpunkt, an welchem ein Lieferant die Verfügbarkeit einer Ersatzkomponente abkündigt, also die Ersatzkomponente nicht mehr verfügbar ist. Zum Zeitpunkt $t_{stock}$ soll eine günstige Anzahl an Ersatzkomponenten im Lager vorgesehen werden.

Es soll eine Zufallsvariable $S$ mit der Wahrscheinlichkeitsverteilungsfunktion $f_s$ bestimmt werden, welche die Anzahl an Komponenten beschreibt, die im Lager zum Zeitpunkt $t_{stock}$ verfügbar sein sollen, sodass alle notwendigen Ersatzkomponenten gemäß den Wahrscheinlichkeitsverteilungsfunktionen $h_{inse}(t)$ und $h_{stock}(t)$ gewährleistet werden können.

Ein Erneuerungsprozess beziehungsweise ein Austausch ist ein stochastisches Modell von zeitlich zufällig auftretenden Erneuerungen beziehungsweise Komponentenaustausch.

Eine Zufallsvariable $X_1$ beschreibt die Zeit zwischen 0 und dem ersten notwendigen Komponentenaustausch. Zufallsvariablen $X_2, X_3, ...$ beschreiben jeweils einen nachfolgenden Komponentenaustausch. Diese Zufallsvariablen $X_i$ werden als Zwischenankunftszeiten (englisch "inter-arrival-times") bezeichnet.

Die Verteilung der Zufallsvariablen $X_i$ kann durch die Wahrscheinlichkeitsverteilungsfunktionen $h_{inst}(t)$ und $h_{stock}(t)$ festgelegt werden.

Die Zufallsvariablen $(X_1, X_2, X_3, ...)$ bilden eine Abfolge unabhängiger Zufallsvariablen, welche die Zeiträume zwischen Erneuerungen, das heißt einem jeweiligen Komponentenaustausch beschreiben.

$$X_i = [0, \infty)$$

$$Pr(X_i > 0) > 0$$

Die Variable $X_i$ kann mittels einer Wahrscheinlichkeitsverteilungsfunktion $h_{X_i}(t)$ und einer zugeordneten Verteilungsfunktion $F_{X_i}(t)$ beschrieben werden.

Eine Zufallsvariable $T[n]$ für eine Zahl $n \in \mathbb{N}$ beschreibt die sogenannte Ankunftszeit (englisch "arrival time").

$F_{T[n]}(t)$ beschreibt die Wahrscheinlichkeit von $n$ Erneuerungen bis zum Zeitpunkt $t$.

$$F_{T[n]}(t) = Pr(T[n] \leq t)$$

Die Zufallsvariable $T[n]$ ist die Summe der Zwischenankunftszeiten $X_i$.

$$T[n] = \sum_{i=1}^{n} X_i$$

Die Wahrscheinlichkeitsverteilungsfunktion von $T[n]$ ist daher die Faltung ihrer Bestandteile.

$$f_{T[n]} = f_X^{*n} = f_X * f_X * ... * f_X$$

Um zwei Zufallsvariablen zu addieren muss der Faltungsoperator auf deren Wahrscheinlichkeitsverteilungsfunktion angewandt werden. Der Faltungsoperator * von zwei Funktionen $f$ und $g$ ist definiert für einen kontinuierlichen Fall als

$$(f * g)(t) = \int f(t') \, g(t - t') \, dt'$$

und für einen diskreten Fall als

$$(f * g)(n) = \sum_{m=-\infty}^{\infty} f(m) \, g(n - m)$$

Der Ausdruck $f^*$ steht für die n-malige Anwendung des Faltungsoperators auf eine Funktion $f$.

Dementsprechend ist es in einer Weiterbildung der Erfindung vorgesehen, dass bei der Bestimmung der optimalen Lagergröße die jeweilige Ankunftszeit mithilfe einer Wahrscheinlichkeitsverteilungsfunktion berücksichtigt wird.

Dadurch wird erreicht, dass auf eine einfache Weise ein Modell für das System gebildet werden kann, welches eine effiziente Bestimmung der optimalen Lagergröße erlaubt und einen optimalen Materialfluss zum Betrieb der Betriebsvorrichtung des Systems mit optimaler Verfügbarkeit sicherstellt.

Für viele Familien von Wahrscheinlichkeitsverteilungsfunktionen gilt, dass die Addition zweier Zufallsvariablen und daher die Berechnung der Wahrscheinlichkeitsverteilungsfunktionen auf einfache Weise möglich ist.

Beispielsweise ist die Summe zweier Poisson-verteilten Variablen mit den Parametern $\lambda_1$ und $\lambda_2$:

$$POI[\lambda_1] + POI[\lambda_1] = POI[\lambda_1 + \lambda_2]$$

Im Erneuerungsprozess werden die Variablen für die Ankunftszeit $T[n]$ verwendet, um eine Zufallsvariable beziehungsweise Zählvariable $N[t]$ zu erzeugen, welche die Anzahl von erwarteten Erneuerungen im Zeitraum $[0,t]$ zählt.

$$N[t] = |\{n \in \mathbb{N} : T[n] \leq t\}$$

mit

$$t \geq 0$$

Der Prozess zur Bestimmung der Ankunftszeit $T[n]$ und der Zählprozess zur Bestimmung der Zufallsvariable $N[t]$ sind zueinander invers, wobei die Wahrscheinlichkeitsfunktion der Zufallsvariable $N[t]$ von der Wahrscheinlichkeitsfunktion der Ankunftszeit $T[n]$ erhalten werden kann.

Für $t \geq 0$ und $n \in \mathbb{N}$ gilt:

1. $T[n] \leq t$, wenn und nur wenn $N[t] \geq n$
2. $N[t] = n$, wenn und nur wenn $T[n] \leq t < T[n + 1]$

Daher kann die Zählvariable $N[t]$ aus einer bekannten Fehlerverteilung $X$ einer Komponente erhalten werden.

Für komplexere Verteilungen von $X$ kann die Implementierung zur Bestimmung von $N$ mittels numerischer Methoden erfolgen. Der wichtigste Fall ist der Poisson-Prozess, wobei $X$ eine Exponentialverteilung mit dem Parameter $\lambda$ aufweist. Dabei weist die $n$-te Ankunftszeit $T[n]$ eine Gamma-Verteilung mit einem Form-Parameter $n$ und einem inversen Skalenparameter $\lambda$ auf. Die Zählvariable $N[t]$ weist eine Poisson-Verteilung mit einem Parameter $\lambda_t$ auf.

Eine Zufallsvariable $N_{inst}[c]$ gibt die Anzahl an Erneuerungen, das heißt Komponentenaustausch von installierten Komponenten bis zum Serviceende $t_{eos}(c)$ an, wobei $c \in C$ gilt.

$$N_{inst}[c] = N[t_{eos}(c) - t_{install}(c)]$$

Die Zwischenankunftsvariablen $X_i$ weisen Wahrscheinlichkeitsverteilungsfunktionen $h_{inst}(t)$ auf, ausgenommen die erste Variable $X_1$, welche eine Wahrscheinlichkeitsverteilungsfunktion $h_{inst}^1(t)$ aufweist.

$$h_{inst}^1(t) = \begin{cases} 0 & t < t_{stock} \\ \dfrac{h_{inst}(t)}{\int_{t_{stock}}^{\infty} h_{inst}(t)\, dt} & t \geq t_{stock} \end{cases}$$

Der Grund für die Verwendung von $h_{inst}^1(t)$ liegt darin, dass die Komponente $c$ zum Zeitpunkt $t_{stock}$ tatsächlich noch im Betrieb befindlich ist, denn anderenfalls würde sie bereits ersetzt worden sein. Daher muss der erste Teil der Wahrscheinlichkeitsverteilungsfunktion $h_{inst}^1(t)$ bis zum Zeitpunkt $t_{stock}$ zu Null gesetzt werden, und der verbleibende Rest zur Fläche von Eins skaliert werden, um eine gültige Wahrscheinlichkeitsverteilungsfunktion zu erhalten.

Eine Zufallsvariable $N_{stock}[c]$ gibt die Anzahl an Erneuerungen, das heißt Komponentenaustausch von lagernden Komponenten an. Solche Erneuerungen sind beispielsweise durch Alterung der lagernden Komponenten notwendig.

$$N_{stock}[c] = N[t_{eos}(c) - t_{stock}(c)]$$

Zugehörige Zwischenankunftsvariable $X_i$ weisen eine Wahrscheinlichkeitsverteilungsfunktion $h_{stock}$ auf.

Um die Notation zu vereinfachen kann ein $\oplus$-Operator für zwei Zufallsvariablen $A$ und $B$ mit jeweiligen Wahrscheinlichkeitsverteilungsfunktionen $f_A$ und $f_B$ eingeführt werden.

Die Wahrscheinlichkeitsverteilungsfunktion der neuen diskreten Zufallsvariable $C = A \oplus B$ ist definiert durch

$$f_C(n) := \sum_{k=0}^{\infty} f_A(k) f_B^{*k}(n)$$

Wobei die Notation $f^{*k}$ für den Faltungsoperator steht, welcher $k$-fach auf $f$ angewendet wird: $f{:}f * f * f * ...$ ($k$-fach)

Die Lagergröße $S[c]$ von Komponenten $c$, das heißt die Anzahl der Komponenten, welche vom Lager umfasst sind, ist eine Zufallsvariable für die Komponente $c \in C$ mit einer Wahrscheinlichkeit $Pr(S[c] = n)$, dass $n$ lagernde Teile als Austauschkomponenten für die Komponente $c$ benötigt werden, um notwendige Erneuerungen von installierten und lagernden Komponenten bis zum Serviceende $t_{eos}(c)$ durchführen zu können, ohne dass die Verfügbarkeit der Betriebsvorrichtung ungünstig beeinträchtigt wird.

$$S[c] = \sum_{r=0}^{\infty} S^{(r)}[c]$$

wobei

$$S^{(0)}[c] = N_{inst}[c] \oplus N_{stock}[c]$$

$$S^{(i)}[c] = S^{(i-1)}[c] \oplus N_{stock}[c], \qquad (i = 1,2,3, ...)$$

Zumeist werden nur wenige Iterationsschritte, beispielsweise fünf Iterationen, benötigt, da spätere Iterationsschritte von $S^{(i)}[c]$ vernachlässigt werden können.

Dementsprechend ist es in einer Weiterbildung der Erfindung vorgesehen, dass die optimale Lagergröße iterativ bestimmt wird. Dadurch wird die optimale Lagergröße auf eine einfache und effiziente Weise bestimmt.

Es kann jedoch ein degenerierter Fall auftreten, wobei die Fehlerrate von lagernden Komponenten und folglich notwendiger Erneuerungen zu hoch ist und nicht durch zusätzliche, lagernde Komponenten kompensiert werden kann. In diesem Fall ist die theoretische Lagergröße unendlich.

Dieser theoretische Fall kann in der Praxis durch das Design der Komponenten verhindert werden. Komponenten sollen eine entsprechend niedrige Lager-Ausfallsrate $h_{stock}(t)$ haben, sodass ihre Lager-Ausfälle durch zusätzlich eingelagerte Komponenten kompensiert werden können.

Dementsprechend ist es in einer Weiterbildung der Erfindung vorgesehen, dass die zweite Serviceendezeit $t_{eos2}$ der zweiten Komponente länger ist, als die Lagerzeit der zweiten Komponente im zweiten Lager, bevorzugt um den Faktor 10 länger, besonders bevorzugt um den Faktor 100 länger und insbesondere um den Faktor 1000 länger. Dadurch kann der degenerierte Fall vermieden werden beziehungsweise die Lagergröße auf ein sinnvolles Maß begrenzt gehalten werden. Da die erste und zweite Komponente baugleich ist, ist die erste und zweite Serviceendezeit $t_{eos1}$, $t_{eos2}$ gleich lang.

Die Lagerzeit der zweiten Komponente im zweiten Lager ist die Differenz zwischen der Zwischenankunftszeit der zweiten Komponente im zweiten Lager und der Ankunftszeit der zweiten Komponente in der Betriebsvorrichtung. Während der Lagerzeit soll die zweite Serviceendezeit $t_{eos2}$ jedoch noch nicht erreicht sein, da keine Erneuerung der ersten Komponente durch eine veraltete, nicht mehr einsatzfähige zweite Komponente erfolgt. Eine Überschreitung der Lagerzeit kann in einem Fall auftreten, in welchem die Lagergröße nicht optimal ist und eine zweite Komponente zu lange im zweiten Lager gelagert wird. Dies soll jedoch vermieden werden.

Eine Wartungsdauer für einen Komponentenaustausch, wie beispielsweise für die Installation der zweiten Komponente an Stelle einer defekten ersten Komponente, ist zur vereinfachten Betrachtung in die Lagerzeit inkludiert.

Eine Gesamt-Lagergröße $S$ ist eine Zufallsvariable mit einer Wahrscheinlichkeit $Pr(S = n)$, dass $n$ lagernde Teile als Austauschkomponenten für alle Komponenten $C$ benötigt werden, um notwendige Erneuerungen von installierten und lagernden Komponenten bis zum Serviceende $t_{eos}(c)$ durchführen zu können, ohne dass die Verfügbarkeit der Betriebsvorrichtung ungünstig beeinträchtigt wird.

$$S = \sum_{c \in C} S(c)$$

Die Gesamt-Lagergröße S ist eine bekannte Wahrscheinlichkeitsfunktion, welche dazu verwendet werden kann, um die Anzahl der lagernden Komponenten in einem entsprechenden Lager und somit eine Steuerung des Materialflusses beim Betrieb eines Systems zu bestimmen.

Eine risikoreiche Entscheidung kann beispielsweise darauf basieren, dass ein Wert für die 50%-Quantile der Gesamt-Lagergröße $S$ erreicht ist.

Eine vorsichtige Entscheidung kann beispielsweise darauf basieren, dass ein Wert für die 98%-Quantile der Gesamt-Lagergröße $S$ erreicht ist.

Die erfindungsgemäße Aufgabe wird auch durch ein System mit optimaler Verfügbarkeit gelöst, umfassend eine Betriebsvorrichtung mit einer ersten Komponente, ein erstes Lager mit einer ersten Anzahl an Exemplaren einer zweiten Komponente und ein zweites Lager mit einer zweiten Anzahl an Exemplaren der zweiten Komponente, und eine Steuervorrichtung, welche dazu eingerichtet ist, das erfindungsgemäße Verfahren auszuführen.

Die Erfindung wird nachfolgend anhand eines in den beigeschlossenen Zeichnungen dargestellten Ausführungsbeispiels näher erläutert. In den Zeichnungen zeigt:

Fig. 1    ein Ausführungsbeispiel für ein erfindungsgemäßes Verfahren und ein erfindungsgemäßes System,

Fig. 2    ein Beispiel von Zeitdauern und Zeitpunkten installierter Komponenten gleicher Bauart der Betriebsvorrichtung aus der Fig. 1,

Fig. 3    ein erstes Beispiel für Wahrscheinlichkeitsverteilungsfunktionen $h_{inse}(t)$ und $h_{inst}^1(t)$,

Fig. 4    ein zweites Beispiel für Wahrscheinlichkeitsverteilungsfunktionen $h_{inst}(t)$ und $h_{inst}^1(t)$.

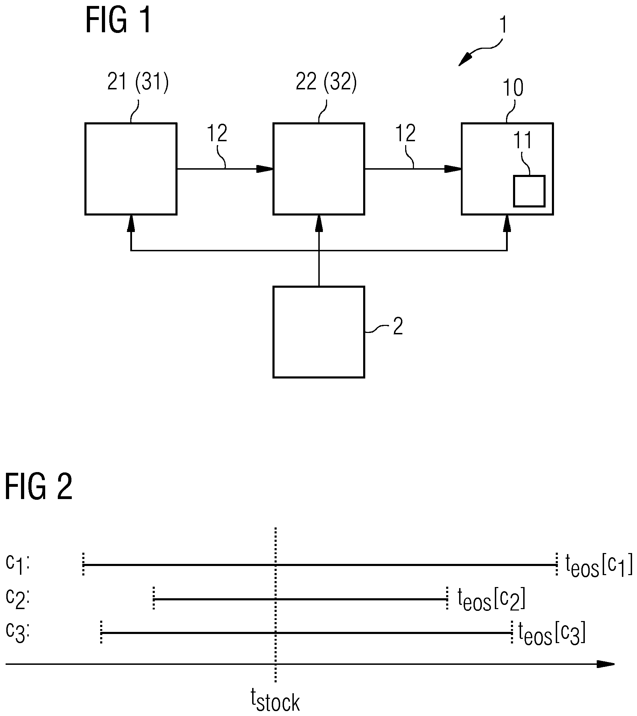

**Fig. 1** zeigt ein Ausführungsbeispiel für ein erfindungsgemäßes Verfahren.

Es ist klar, dass zur Ausführung des Verfahrens weitere Vorrichtungen erforderlich sind, die aufgrund einer besseren Übersichtlichkeit nicht dargestellt sind, wie beispielsweise Transportvorrichtungen zwischen Lagern und einer Betriebsvorrichtung, sowie Rechenvorrichtungen zur Berechnung von Parametern und weitere Steuervorrichtungen zur Steuerung der erfindungsgemäßen Abläufe und Verfahrensschritte.

Ein System 1 umfasst eine Betriebsvorrichtung 10 mit einer ersten Komponente 11.

Die Betriebsvorrichtung 10 kann beispielsweise eine Produktionsanlage zur Erzeugung von Produkten oder eine Anlage zur Bereitstellung von Betriebsmitteln sein.

Im weiteren Sinn kann die Betriebsvorrichtung 10 auch die Bereitstellung eines Dienstleistungsservices sein, in welchem ein oder mehrere Vorrichtungen dafür verwendet werden, das Dienstleistungsservice bereitzustellen, wie der Betrieb eines öffentlichen Verkehrsmittels durch entsprechende Betriebsvorrichtungen.

Die Betriebsvorrichtung 10 umfasst eine oder mehrere Komponenten 11, wie Fahrzeuge, Teile der Fahrzeuge, aber auch Schienen oder eine Stromversorgung für den Betrieb der Fahrzeuge.

Ein erstes Lager 21 umfasst eine erste Anzahl 31 zweiter Komponenten 12, welche baugleich mit der ersten Komponente 11 sind.

Die Komponente 11, 12 könnte beispielweise ein Wagon oder eine Weiche eines Eisenbahn-Systems sein.

Eine Lagerung einer Anzahl 32 einer solchen zweiten Komponente 12 im zweiten Lager 22 über das nötige Maß zur Erhaltung der optimalen Verfügbarkeit hinaus kann beispielsweise durch Korrosion oder Beschädigung bei der Lagerung der zweiten Komponente 12 unerwünscht sein.

Es kann beispielsweise vorgesehen sein, dass die Lagerung im zweiten Lager 22 im freien Feld ohne besondere Sicherheitsoder Konservierungsmaßnahmen für die zweite Komponente 12 erfolgt.

Natürlich kann auch ein unerwünscht hoher Platzbedarf bei der Lagerung von zweiten Komponenten 12 im zweiten Lager 22 ein Aspekt sein, welcher für die Ermittlung eines optimalen Lagerstandes und eine entsprechende Lagerhaltung spricht.

Das erste Lager 21 kann beispielsweise ein Lager bei einem Hersteller oder einem Großhändler sein und ist nicht in direktem Kontakt zur Betriebsvorrichtung 10.

Es kann für die Bereitstellung vom ersten Lager 21 zum zweiten Lager 22, beispielsweise durch lange Herstellzeiten, lange Transportwege oder administrative Vorschriften, ein entsprechend langer Zeitraum benötigt werden.

Das erste Lager 21 kann beispielsweise auch ein logistischer Wareneingang des Systems 1 sein und kein physikalischer Lagerort.

Ein zweites Lager 22 umfasst eine zweite Anzahl 31 zweiter Komponenten 22. Das zweite Lager 22 ist ein Lager, welches in direktem Kontakt zur Betriebsvorrichtung 10 steht und ist beispielsweise Teil einer Wartungseinheit für die Betriebsvorrichtung 10.

Eine Bereitstellung der zweiten Komponente 12 zur Betriebsvorrichtung 10 erfolgt somit im System 1 in der Reihenfolge vom ersten Lager 21 zum zweiten Lager 22 zur Betriebsvorrichtung 10.

Die erste Komponente 11 weist eine erste Ankunftszeit $T_1$ und eine erste Serviceendezeit $t_{eos1}$ auf.

Die zweite Komponente 12 weist eine zweite Ankunftszeit $T_2$ und eine zweite Serviceendezeit $t_{eos2}$ auf.

Die zweite Serviceendezeit $t_{eos2}$ der zweiten Komponente 12 ist länger, als die Lagerzeit der zweiten Komponente 12 im zweiten Lager 22.

Die erste und zweite Serviceendezeit $t_{eos1}$, $t_{eos2}$ sind in diesem Beispiel von der MTBF der entsprechenden Komponente abgeleitet.

Die erste beziehungsweise zweite Ankunftszeit $T_1$, $T_2$ kennzeichnen jeweils jenen Zeitpunkt, zu welchem die jeweilige Komponente 11 oder 12 im System 1 aufgenommen wird.

Zumindest ein Exemplar der zweiten Komponente 12 wird vom ersten Lager 21 zum zweiten Lager 22 bereitgestellt, sobald die zweite Anzahl 32 unter eine optimale Lagergröße fällt.

Es werden folglich so viele Exemplare der zweiten Komponente 12 bereitgestellt, bis die optimale Lagergröße erreicht ist.

Dies gilt für einen initialen sowie bereits laufenden Betrieb des Systems 1.

Die optimale Lagergröße entspricht in diesem Beispiel der zuvor definierten Lagergröße $S[c]$.

Durch die Ergänzung des zumindest einen Exemplars zum zweiten Lager 32 wird die zweite Anzahl 32 mit der optimalen Lagergröße somit wieder erreicht.

Die optimale Lagergröße wird unter Verwendung der ersten und zweiten Ankunftszeit $T_1$, $T_2$ und der ersten und zweiten Serviceendezeit $t_{eos1}$, $t_{eos2}$ bestimmt.

Beim Betrieb der Betriebsvorrichtung 10 erfolgt bei Erreichen der ersten Serviceendezeit $t_{eos1}$ der ersten Komponente 11 eine Bereitstellung eines Exemplars der zweiten Komponente 12 vom zweiten Lager 22 zur Betriebsvorrichtung 10.

In der Betriebsvorrichtung 10 wird die erste Komponente 11 durch die zweite Komponente 12 ausgetauscht.

In diesem Beispiel wird bei der Bestimmung der optimalen Lagergröße die jeweilige Ankunftszeit $T_1$, $T_2$ mithilfe einer Wahrscheinlichkeitsverteilungsfunktion berücksichtigt.

In Fig. 1 ist auch ein erfindungsgemäßes System 1 mit optimaler Verfügbarkeit erkennbar.

Das System 1 umfasst ferner eine Steuervorrichtung 2, welche dazu eingerichtet ist, das erfindungsgemäße Verfahren auszuführen.

**Fig. 2** zeigt ein Bespiel für Installationszeitpunkte $t_{install}(c_1)$, $t_{install}(c_2)$ und $t_{install}(c_3)$ und zugehörige Serviceendezeit $t_{eos}(c_1)$, $t_{eos}(c_2)$ und $t_{eos}(c_3)$ von drei installierten Komponenten $C = \{c_1, c_1, c_3\}$ gleicher Bauart der Betriebsvorrichtung 10.

Für dieses Beispiel wird angenommen, dass alle Komponenten $C$ noch funktionieren und zum Betrachtungszeitpunkt $t_{stock}$ in Verwendung sind. Falls eine Komponente bereits vor dem Betrachtungszeitpunkt $t_{stock}$ ersetzt wurde, ist die Ersatzkomponente Teil der Komponenten $C$ und nicht mehr die ursprünglich installierte Komponente.

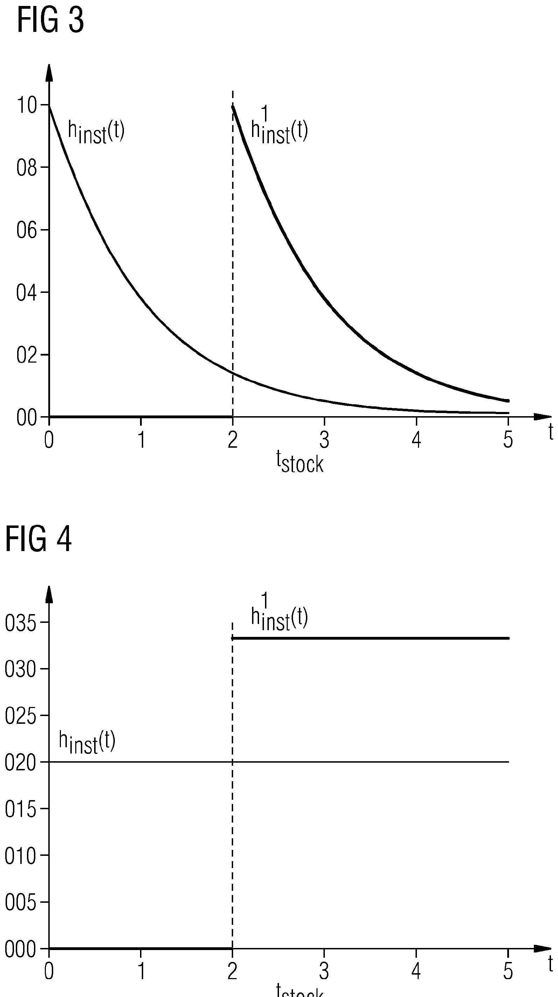

**Fig. 3** zeigt jeweils ein erstes Beispiel für Wahrscheinlichkeitsverteilungsfunktionen $h_{inst}(t)$ und $h_{inst}^1(t)$.

Die Wahrscheinlichkeitsverteilungsfunktion $h_{inst}^1(t)$ basiert hier auf der Wahrscheinlichkeitsverteilungsfunktion $h_{inst}(t)$ mit einer Exponentialverteilung.

Für eine exponentiell verteilte Wahrscheinlichkeitsverteilungsfunktion resultiert eine horizontale Verschiebung der Kurve vom Zeitpunkt Null zum Zeitpunkt $t_{stock}$ in dieselbe Funktion $h_{inst}^1(t)$.

**Fig. 4** zeigt jeweils ein weiteres Bespiel für Wahrscheinlichkeitsverteilungsfunktionen $h_{inst}(t)$ und $h_{inst}^1(t)$.

Die Wahrscheinlichkeitsverteilungsfunktion $h_{inst}^1(t)$ basiert hier auf der Wahrscheinlichkeitsverteilungsfunktion $h_{inst}(t)$ mit einer Gleichverteilung zwischen einem Funktionswert 0 und 5.

Die Wahrscheinlichkeitsverteilungsfunktion $h_{inst}^1(t)$ ist gleichverteilt zwischen einem Funktionswert 2 und 5.

**Bezugszeichenliste:**

| | |
|---|---|
| 1 | System |
| 2 | Steuervorrichtung |
| 10 | Betriebsvorrichtung |
| 11, 12 | Komponente |
| 21, 22 | Lager |
| 31, 32 | Lagerstand, Anzahl an vorrätigen Komponenten |
| $h_{inst}(t)$, $h_{inse}(t)$ | Wahrscheinlichkeitsverteilungsfunktion |
| $t$ | Zeit |
| $t_{eos}$, $t_{eos1}$, $t_{eos2}$ | Serviceende (zeit), d.h. Endzeitpunkt einer Serviceverpflichtung |
| $t_{install}$ | Installationszeitpunkt einer Komponente in der Betriebsvorrichtung |
| $t_{stock}$ | Betrachtungszeitpunkt |

**Patentansprüche**

1. Verfahren umfassend zu dessen Ausführung erforderliche Rechenvorrichtungen zur Berechnung von Parametern zum Betrieb eines Systems (1) mit optimaler Verfügbarkeit, umfassend eine Betriebsvorrichtung (10) umfassend eine Produktionsanlage zur Erzeugung von Produkten, oder umfassend eine Betriebsvorrichtung (10) umfassend ein oder mehrere Fahrzeuge, Teile der Fahrzeuge, Schienen oder Stromversorgung für den Betrieb der Fahrzeuge, ein Wagon oder eine Weiche eines Eisenbahn-Systems, jeweils mit einer ersten Komponente (11), ein erstes Lager (21) mit einer ersten Anzahl (31) an Exemplaren einer zweiten Komponente (12) und ein zweites Lager (22) mit einer zweiten Anzahl (32) an Exemplaren der zweiten Komponente (12),

   wobei die zweite Komponente (12) mit der ersten Komponente (11) baugleich ist,
   und die erste und die zweite Komponente (11, 12) eine erste beziehungsweise zweite Ankunftszeit und eine erste beziehungsweise zweite Serviceendezeit ($t_{eos1}$, $t_{eos2}$) aufweisen,
   wobei die erste und zweite Ankunftszeit jeweils jenen Zeitpunkt kennzeichnen, zu welchem die jeweilige Komponente (11, 12) im System (1) aufgenommen wird,
   und zumindest ein Exemplar der zweiten Komponente (12) vom ersten Lager (21) zum zweiten Lager (22) bereitgestellt wird, sobald die zweite Anzahl (32) unter eine optimale Lagergröße fällt und die zweite Anzahl (32) die optimale Lagergröße somit wieder erreicht,
   wobei die optimale Lagergröße unter Verwendung der ersten und zweiten Ankunftszeit und der ersten und zweiten Serviceendezeit ($t_{eos1}$, $t_{eos2}$) bestimmt wird,
   und beim Betrieb der Betriebsvorrichtung (10), bei Erreichen der ersten Serviceendezeit ($t_{eos1}$) der ersten Komponente (11), eine Bereitstellung eines Exemplars der zweiten Komponente (12) vom zweiten Lager (22) zur Betriebsvorrichtung (10) erfolgt und in der Betriebsvorrichtung (10) die erste Komponente (11) durch die zweite Komponente (12) ausgetauscht wird.

2. Verfahren nach dem vorhergehenden Anspruch, wobei bei der Bestimmung der optimalen Lagergröße die jeweilige Ankunftszeit mithilfe einer Wahrscheinlichkeitsverteilungsfunktion berücksichtigt wird.

**3.** Verfahren nach einem der vorhergehenden Ansprüche, wobei die optimale Lagergröße iterativ bestimmt wird.

**4.** System (1) mit optimaler Verfügbarkeit, umfassend eine Betriebsvorrichtung (10) mit einer ersten Komponente (11), ein erstes Lager (21) mit einer ersten Anzahl (31) an Exemplaren einer zweiten Komponente (12) und ein zweites Lager (22) mit einer zweiten Anzahl (32) an Exemplaren der zweiten Komponente (12), und eine Steuervorrichtung (2), welche dazu eingerichtet ist, das Verfahren nach einem der vorhergehenden Ansprüche auszuführen.

**Claims**

**1.** Method comprising computing apparatuses, required for its execution, for calculating parameters for operation of a system (1) with optimal availability, comprising an operating apparatus (10) comprising a production installation for generating products, or comprising an operating apparatus (10) comprising one or more vehicles, parts of vehicles, rails or power supply for the operation of the vehicles, a carriage or a switch of a railway system, in each case with a first component (11), a first warehouse (21) with a first number (31) of examples of a second component (12) and a second warehouse (22) with a second number (32) of examples of the second component (12),

wherein the second component (12) is identical in construction to the first component (11),
and the first and the second component (11, 12) have a first or second arrival time and a first or second service end time ($t_{eos1}$, $t_{eos2}$),
wherein the first and second arrival time identify that point in time in each case at which the respective component (11, 12) is received in the system (1),
and at least one example of the second component (12) is provided from the first warehouse (21) to the second warehouse (22) as soon as the second number (32) drops below an optimal warehouse size and the second number (32) therefore once again reaches the optimal warehouse size,
wherein the optimal warehouse size is determined using the first and second arrival time and the first and second service end time ($t_{eos1}$, $t_{eos2}$),
and during operation of the operating apparatus (10), when the first service end time ($t_{eos1}$) of the first component (11) is reached, an example of the second component (12) is provided from the second warehouse (22) to the operating apparatus (10) and in the operating apparatus (10) the first component (11) is replaced with the second component (12).

**2.** Method according to the preceding claim, wherein when the optimal warehouse size is determined, the respective arrival time is taken into account with the aid of a probability distribution function.

**3.** Method according to one of the preceding claims, wherein the optimal warehouse size is determined iteratively.

**4.** System (1) with optimal availability, comprising an operating apparatus (10) with a first component (11), a first warehouse (21) with a first number (31) of examples of a second component (12) and a second warehouse (22) with a second number (32) of examples of the second component (12), and a control apparatus (2), which is designed to execute the method according to one of the preceding claims.

**Revendications**

**1.** Procédé comprenant des dispositifs de calcul qui sont nécessaires à sa mise en œuvre et permettent de calculer des paramètres destinés au fonctionnement d'un système (1) présentant une disponibilité optimale, comprenant un dispositif d'exploitation (10) comprenant une installation de production permettant de produire des produits, ou comprenant un dispositif d'exploitation (10) comprenant un ou plusieurs véhicule(s), des parties des dits véhicules, des rails ou une alimentation électrique destinée au fonctionnement des véhicules, un wagon ou un aiguillage d'un système ferroviaire, respectivement avec un premier composant (11), un premier stockage (21) avec un premier nombre (31) d'exemplaires d'un second composant (12) et un second stockage (22) avec un second nombre (32) d'exemplaires du second composant (12),

dans lequel le second composant (12) est de structure identique au premier composant (11), et les premier et second composants (11, 12) présentent un premier, respectivement un second, temps d'arrivée et un premier, respectivement un second, temps de fin de service ($t_{eos1}$, $t_{eos2}$),
dans lequel les premier et second temps d'arrivée indiquent respectivement l'instant auquel le composant (11, 12) respectif est reçu au sein du système (1), et au moins un exemplaire du second composant (12) en provenance du premier stockage (21) est fourni au second stockage (22) dès que le second nombre (32) tombe en dessous d'une taille de stockage optimale, et le second nombre (32) atteint ainsi à nouveau la taille de stockage optimale,

dans lequel la taille de stockage optimale est déterminée en utilisant les premier et second temps d'arrivée et les premier et second temps de fin de service ($t_{eos1}$, $t_{eos2}$), et, en cours de fonctionnement du dispositif d'exploitation (10), lorsque le premier temps de fin de service ($t_{eos1}$) du premier composant (11) est atteint, un exemplaire du second composant (12) est fourni par le second stockage (22) au dispositif d'exploitation (10) et le premier composant (11) est remplacé par le second composant (12) au sein du dispositif d'exploitation (10).

2. Procédé selon la revendication précédente, dans lequel le temps d'arrivée respectif est pris en compte à l'aide d'une fonction de distribution de probabilité lors de la détermination de la taille de stockage optimale.

3. Procédé selon l'une quelconque des revendications précédentes, dans lequel la taille de stockage optimale est déterminée de manière itérative.

4. Système (1) présentant une disponibilité optimale, comprenant un dispositif d'exploitation (10) avec un premier composant (11), un premier stockage (21) avec un premier nombre (31) d'exemplaires d'un second composant (12) et un second stockage (22) avec un second nombre (32) d'exemplaires du second composant (12), et un dispositif de commande (2) conçu afin de mettre en œuvre le procédé selon l'une quelconque des revendications précédentes.

FIG 1

FIG 2

## FIG 3

## FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10010494 A1